(19) Europäisches Patentamt
European Patent Office
Office européen des brevets

(11) EP 2 397 689 A1

(12) EUROPEAN PATENT APPLICATION

(43) Date of publication:
21.12.2011 Bulletin 2011/51

(51) Int Cl.:
*F03D 9/00* (2006.01)     *H02J 3/38* (2006.01)
*H02J 3/16* (2006.01)

(21) Application number: 10166147.8

(22) Date of filing: 16.06.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(71) Applicant: SIEMENS AKTIENGESELLSCHAFT
80333 München (DE)

(72) Inventors:
• Andresen, Björn
8752 Ostbirk (DK)
• Egedal, Per
7400 Herning (DK)
• Obradovic, Dragan
85521 Ottobrunn (DE)

(54) **Method and system for controlling a power production entity**

(57) It is described a method for controlling a power production entity, the method comprising: generating a plurality of electric power signals by a plurality of power production entities; measuring a plurality of power levels of the plurality of power signals; modifying the plurality of power signals; supplying the plurality of modified power signals at a common node; adjusting an operation voltage of at least one power production entity of the plurality of power production entities based on the plurality of measured power levels such that a power loss of the power signals caused by the modifying and/or supplying is minimized. Also a system for controlling a power production entity is described.

## FIG 1

EP 2 397 689 A1

**Description**

Field of invention

The present invention relates to a method and a system for controlling a power production entity. In particular, the present invention relates to a method and to a system for controlling a power production entity, wherein an operation voltage of at least one power production entity is adjusted.

Art Background

A power production facility may comprise a plurality of power production entities, such as a plurality of wind turbines. Power output terminals of the plurality of power production entities may be connected to a point of common coupling (PCC) to which the individual power signals generated by each of the power production entities are supplied. Further, the power production entities may allow setting their operation voltages which define at which voltage level the individual power production entities supply their electric power to the point of common coupling.

In a conventional power production facility the operation voltages of the individual power production entities, such as wind turbines, are set to a same voltage reference set point. Thereby, a desired target voltage may be achieved at the point of common coupling.

US 6,628,103 B2 discloses a power factor control apparatus and method, wherein a power factor control section controls a current flowing through a field magnetic coil of a corresponding power generator, thereby raising the voltage of the power generator.

There may be a need for a method for controlling a power production entity which provides improved control of the power production entity in particular with respect to efficiency. In particular, there may be a need for a method and a system for controlling a power production entity which is improved with respect to adjusting an operation voltage of the power production entity.

Summary of the Invention

This need may be met by the subject matter according to the independent claims. Advantageous embodiments of the present invention are described by the dependent claims.

According to an embodiment a method for controlling a power production entity is provided, wherein the method comprises generating a plurality of electric power signals by a plurality of power production entities; measuring a plurality of power levels of the plurality of power signals; modifying the plurality of power signals; supplying the plurality of modified power signals at a common node; adjusting an operation voltage of at least one power production entity of the plurality of power production entities based on the plurality of measured power levels such that a power loss of the power signals caused by the modifying the power signals and/or the supplying the modified power signals is minimized.

Each of the plurality of electric power production entities may comprise an electromechanical transducer for converting mechanical energy into electric energy. In particular, each of the plural power production entities may comprise an electric generator. The electric energy may be generated by the generator from mechanical energy, such as wind energy, wave energy, and/or energy of the sun.

The plurality of power levels of the plurality of power signals generated by the plurality of power production entities may be measured by any suitable measuring device which is responsive to electric power. The power levels may for example be measured by measuring a voltage and a current of the power signals, wherein the power may be determined as a product of the current and the voltage measured. The power levels may be measured at an output of the generators comprised in the power production entities. The measured power levels may represent originally generated electric power of the plurality of power production entities.

The electric power signal generated by a generator of a power production entity may comprise an alternating electric signal which varies with a frequency depending on an operational state of the corresponding power production entity. Further, the power level of the electric power signal may depend on the operational state of the power production entity. In particular, for a wind turbine, the electric power level and the frequency of the electric power signal generated by the wind turbine may depend on wind conditions and adjustments of the rotor blades of the wind turbine. Thus, plural wind turbines may generate plural electric power signals having different frequency and having also different power levels according to an embodiment.

The modifying of a power signal generated by the a power production entity may occur between the generating the original electric power at the generator of the power production entity and the common node to which the modified power signal of all power production entities are supplied. The modifying may comprise modifying amplitude and/or phase of voltage and/or current of the electric power signals generated by the plurality of power production entities. The modifying may for example comprise changing a frequency of the electric power signal to a frequency which is set by local regulations. The frequency may for example be 50 Hz or 60 Hz. The modifying the plurality of power signals may cause a power loss. The modifying the plurality of power signals may comprise leading or transmitting the power levels through a plurality of impedances which model electric influences of electric components arranged between each generator of a power production entity and the common node.

Thus, a power supplied to the common node may be by the power loss smaller than a sum of electric power levels generated at the plurality of power production entities, in particular generated at outputs of plural generators of the plural power production entities.

The common node may be a point of electric connection to which the plural power production entities are connectable, for instance via plural switches which allow connecting or disconnecting each of the plural power production entities to the common node. The supplying the plurality of modified power signals at the common node may at least partially also cause some power loss.

The power loss of the power signals may be defined according to an embodiment as a difference of a sum of power signals generated by the plurality of power production entities and a power supplied to the common node. In particular, the power loss may be calculated taking into account electric properties of electric components arranged within the electric path from each generator to the common node. In particular, the laws of electricity and Maxwell's equations and/or Kirchhoff's laws may be applied to derive the power loss when the power levels of the plurality of power signals are known and when voltage and/or current at the common node and/or at another node beyond the common node are known.

The operation voltage of each of the power production entities may be between 650 V and 740 V. In other embodiments the operation voltage of each of the power production entities may assume other values. The modifying the plurality of power signals may involve transforming the power signals to a higher voltage such as between 30 kV - 40 kV. In other embodiments the modifying the plurality of power signals may involve transforming the power signals to a higher voltage having another value.

According to an embodiment the adjusting the operation voltage of the at least one power production entity is performed such that a voltage at the common node is within a predetermined minimum and a predetermined maximum of a target node voltage, in particular in a range of 0.5 to 1.5 times a predetermined target node voltage, further in particular in a range of 0.9 to 1.1 times a predetermined target node voltage

The predetermined minimum and the predetermined maximum of the target node voltage may depend on the local regulations. According to an embodiment the voltage at the common node may be different in different instances of time. In particular, for minimizing the power loss it may be necessary to adjust the operation voltage of at least one power production entity such that the voltage of the common node varies with time.

According to an embodiment the method comprises adjusting the operation voltage of more than one of the plurality of power production entities. According to an embodiment the operation voltage of all of the plurality of power production entities is adjusted in order to minimize the power loss.

By exploiting that the voltage at the common node may vary the operation voltage of at least one power production entity may be adjusted such that the power loss may even further be reduced.

According to an embodiment the adjusting the operation voltage(s) of the at least one power production entity (or more than one power production entity) is performed such that the adjusted operation voltage(s) is within a predetermined minimum and predetermined maximum of a target operation voltage, in particular in a range of 0.9 to 1.1 times a predetermined target operation voltage.

Thereby, the predetermined minimum and the predetermined maximum of the target operation voltage for each of the plurality of power production entities may depend on local regulations. According to an embodiment the predetermined target operation voltage may amount to 650 V - 740 V, in particular 690 V. According to an embodiment operation voltages adjusted at two different power production entities are different by more than 10%. According to an embodiment more than two operation voltages adjusted at more than two power production entities differ by a factor greater than 1.1. By exploiting that the operation voltages may be differently adjusted at different power production entities the power loss may even further be reduced. Thereby, the efficiency of a power production facility controlled by the method according to an embodiment may be improved regarding its efficiency.

According to an embodiment the adjusting the operation voltage is performed such that at least two adjusted operation voltages are different. The different adjusted operation voltages are adjusted at two different power production entities. In particular, the operation voltage of the power production entity may represent a wind turbine terminal voltage of a wind turbine. Adjusting the operation voltage of two different power production entities to a different level may lead to a smaller power loss than adjusting the operation voltage of the two different power production entities to a same level. According to an embodiment at least two operation voltages adjusted at two different power production entities differ by a factor of more than 1.1. Thereby, the efficiency of the power production facility controlled by the method according to an embodiment may even further be improved.

According to an embodiment the adjusting the operation voltage is further based on establishing a relationship between the power loss and the operation voltage. In particular the power loss may be calculated as a sum of partial power losses occurring on the electric path between the generators of the power production entities and the common node. Each partial power loss may be modelled based on one or more particular impedance(s) and on a current running through the impedance(s). The impedance(s) may in particular be complex impedance(s) causing a relative phase-shift between voltage and current applied to the impedance(s). The current running through the impedance(s) may depend on the operational voltage adjusted at the plural power production entities. Thereby, a functional relationship (mathematical relationship) between the power loss and the operation voltage(s) may be established. In order to determine the operation voltages which are to be adjusted at the plural power production entity a gradient of this functional relationship with respect to all operation voltages applied to the plural power production entities may be derived. The gradient (representing a vector quantity having a number of components corresponding of the number of power production entities) may then be set to zero in order to find the operation voltages leading to a minimal power loss. Thereby, the adjusting the operation voltage(s) may be performed in a simple and reliable way.

According to an embodiment the modifying the plurality of power signals comprises converting the plurality of power signals to a predetermined frequency; transforming the plurality of converted power signals to a higher voltage; and transmitting the plurality of transformed power signals to the common node.

The power signal output from each generator of the plural power production entities may be an alternating signal having varying frequency depending on several environmental conditions. The converting the plurality of power signals may comprise converting the alternating power signals to direct current (DC) and converting the direct current to alternating signals having a predetermined frequency, such as 50 Hz or 60 Hz. The predetermined frequency may depend on local regulations. Further, the converting the plurality of power signals may comprise changing a phase relationship between voltage and current of the power signals, in particular involving changing the relative phase angle $\varphi$.

The transforming the plurality of converted power signals to a higher voltage may comprise transforming the converted power signals from around 690 V to a voltage range between 30 kV and 40 kV, in particular 33 kV. The transforming the plurality of converted power signals to a higher voltage may involve a power loss as the step of transmitting the transformed power signals to the common node.

According to an embodiment the adjusting the operation voltages is further based on modelling the modifying the plurality of power signals using simulation, in particular considering a gradient of the power loss of the power signals with respect to at least one of the operation voltages. The modelling may comprise establishing a physical mathematical representation of electrical components comprised in the power production facility. Properties of electrical components may be modelled by assigning (complex) impedances. In particular the power loss may be described (by modelling or establishing a simulation model) as a mathematical function depending on (at least one of) the operation voltage(s). In particular a gradient of the power loss of the power signals with respect to at least one of the operation voltages may indicate a direction or a manner how the operation voltages should be adjusted in order to minimize the power loss.

The converting the plurality of power signals may be modelled by an impedance $Z_{reactor}$, the transforming the plurality of converted power signals may be modelled as an impedance $Z_{tur}$-bine_TX and the transmitting the plurality of transformed power signals may be modelled as an impedance $Z_{line}$. By identifying and modelling individual portions of the modifying the plurality of power signals the adjusting the operation voltage of the at least one power production entity may be even further be improved such that the power loss is minimized.

Using the established model a simulation may be performed (e.g. based on measured quantities) for predicting voltages and currents at different points (nodes) within the power production facility. From these predicted values the power loss may be derivable which may in particular depend on the operation voltages of the plurality of power production entities. Thereby, it may be enabled to determine those operation voltages of the plural power production entities that lead to a minimal power loss of the power production facility.

According to an embodiment the method for controlling a power production entity further comprises measuring a voltage at the common node, wherein the adjusting the operation voltage(s) is further based on the measured common node voltage.

The adjusting the operation voltage(s) of the at least one power production entity may comprise an iterative process which may comprise determining the operation voltage(s) to be set, adjusting the operation voltage(s), measuring the voltage at the common node (which may have changed due to the adjusting the operation voltage(s)), comparing the measured voltage at the common node with a predetermined target value of the common node voltage, and correcting the adjusting the operation voltage(s) such that a difference between the measured voltage at the common node and the target voltage at the common node decreases. Thus, the measured voltage at the common node may be used as a feedback signal to improve the adjusting the operation voltage(s) in order to minimize the power loss.

According to an embodiment the adjusting the operation voltage(s) is further based on a solution of minimizing the power loss under the constraint that the voltage at the common node remains within a predetermined minimum and predetermined maximum of a target node voltage, in particular in a range of 0.9 to 1.1 times a predetermined target node voltage.

By modelling the power production facility this problem may be transferred to a mathematical optimization problem having a constraint. Thereby, the optimum of the adjusting the operation voltage(s) at the at least one power production entity may be derived in an easy way. In particular this approach may not require to measure the voltage at the common node. Instead, given the measured power levels of the plurality of power signals generated by the plurality of power production entities the operation voltage(s) of the at least one power production entity may be calculated as the solution of minimizing the power loss under the constraint and these derived operation voltage(s) may be adjusted at the at least one power production entity without requiring to measure the voltage at the common node, in particular without requiring to feedback the voltage measured at the common node. Thereby, the optimal operation voltage(s) may be derived "offline" in an open loop manner.

According to an embodiment a system for controlling a power production entity is provided, wherein the system comprises a common node at which a plurality of modified power output signals are supplied, the plurality of modified power output signals being obtained by modifying a plurality of electric power signals generated by a plurality of power production entities; a measuring system for determining power levels of the plurality of power output signals; and a control unit adapted to adjust an operation voltage of at least one of the plurality of power production entities such that a power loss caused by the modifying the electric power signals and/or supplying the modified electric power signals to the common node is minimized.

The plurality of power production entities may particularly comprise at least one wind turbine. Each of the plurality of power production entities may comprise an electromechanical transducer for converting mechanical energy to electric energy. In particular, each of the plurality of power production entities may comprise an electric generator, an AC/AC converter for converting an electric power signal output from the generator to an electric power signal having a predetermined frequency and having a predetermined voltage and/or current, in particular being a three phase power signal. Further, each of the plurality of power production entities may comprise a filter circuit for further filtering the AC power signal output from the converter in order to transform it to a signal having at least approximately a sine shape with respect to time.

Further, each of the plurality of power production entities may comprise a transformer to transform the filtered power signal output from the filter circuit to a higher voltage, such as to a voltage of between 30 kV and 40 kV. Further, the transformed power signal may be transmitted to the common node via a transmission line.

Transferring the power signal originally generated by the generator of the power production entities to the common node may cause a power loss which may depend on electric components in the transfer path between the generator and common node. The power loss for each individual power production entity from its generator to the common node may in particular depend on the operation voltage of the power production entity. In particular, the power production entities may comprise different electric components between their generators and the common node and may also provide different power levels at their generators such that the individual power losses of the different power production entities may be different.

The power loss (or overall power loss) may be represented by a sum of individual power losses of the plurality of power production entities. Due to the control unit which adjusts the operation voltage(s) of at least one of the plurality of power production entities (according to an embodiment the operation voltages of all power production entities are adjusted by the control unit) the efficiency of a power production facility including the power production entities may be improved.

According to an embodiment the measuring system comprises a voltage sensor for measuring a voltage at the common node and/or a power sensor for measuring a power of a sum of the plurality of power output signals. The power sensor may be a device for measuring a quantity indicative of a power of the sum of the plurality of power output signals or indicative of a sum of a power of the plurality of power output signals. Instead of measuring the voltage at the common node the voltage sensor may be adapted for measuring a voltage at a node different from the common node, such as a node further downstream (in particular beyond a high voltage transformer) of the common node. The measured voltage at the common node and/or the measured power of each individual turbine or power production entity or the measured sum of the power output from the plural power production entities may be used for determining the operation voltage(s) to be set at the at least one of the plurality of power production entities in order to minimize the power loss. Thereby, the control method performed by the control unit may be improved.

According to an embodiment an electric power facility comprises a system for controlling a power production entity according to an embodiment as disclosed above; and a plurality of power production entities adapted to generate the plurality of power output signals. Compared to a conventional electric power facility the electric power facility according to an embodiment may have an improved efficiency.

According to an embodiment the control unit is adapted to control the voltage based on a model of the electric power facility. Thereby, the efficiency of the electric power facility is even further improved.

It has to be noted that embodiments of the invention have been described with reference to different subject matters.

In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the invention are now described with respect to the accompanying drawings.

Figure 1 schematically illustrates a power production facility according to an embodiment;

Figure 2 schematically illustrates a system for controlling a power production entity according to an embodiment;

Figure 3 schematically illustrates a power production facility according to a further embodiment;

Figure 4 schematically illustrates a method and a system for controlling a power production entity;

Figure 5 schematically illustrates a turbine voltage control; and

Figure 6 schematically illustrates a turbine voltage control strategy according to an embodiment.

Detailed Description

The illustration in the drawing is schematically. It is noted that in different figures, similar or identical entities are provided with the same reference signs or with reference signs, which are different from the corresponding reference signs only within the first digit.

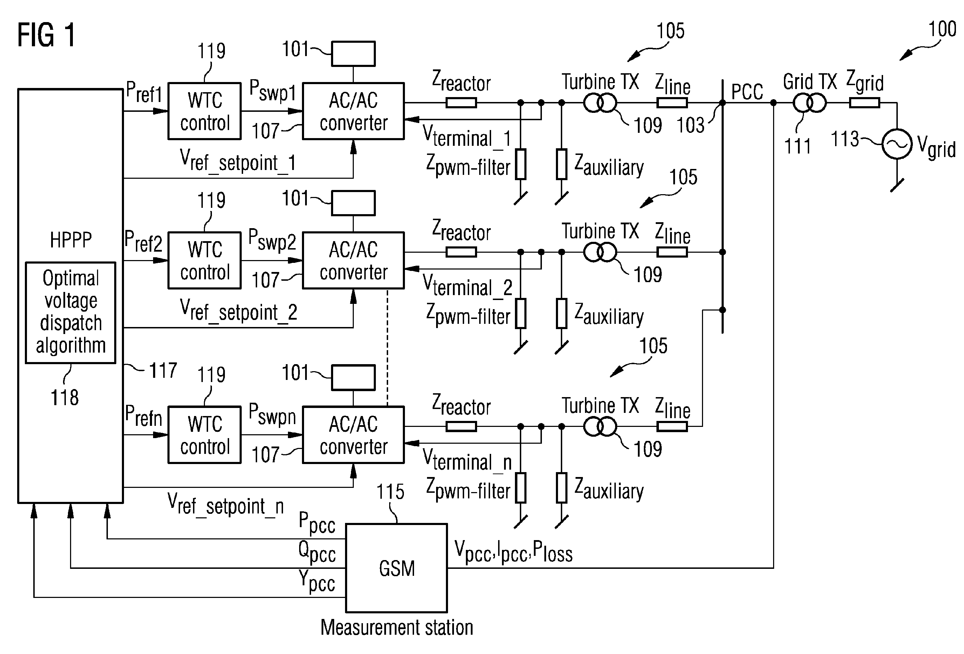

Figure 1 schematically illustrates a power production facility 100 according to an embodiment. The power production facility 100 comprises plural generators 101 (in particular of plural wind turbines) which output electric power signals at their outputs. The power of the power signals output from the generators 101 may represent as a sum the original power output from the plurality of generators 101. The plural electric power signals output from the generators 101 are fed through a number of electrical components to a point of common coupling (PCC) 103 via electric paths 105. By transferring the electric power signals from the generators 101 to the common node 103 a power loss occurs which may depend on an operation voltages $V_{terminal}$ at the AC/AC converters 107 to which the power signals output from the generators 101 are provided.

The electrical property of the converters 107 with respect to power loss is modelled by the impedances $Z_{reactor}$. The electric path 105 further comprises a filter for filtering the converted power signal which is modelled as an impedance $Z_{pwm}$-filter. A further power loss occurs due to auxiliary electric equipment at the turbine which is modelled as an impedance $Z_{auxiliary}$. Further, the converted, filtered power signal is transformed via a transformer 109 and then transmitted to the common node 103, wherein the transmission is modelled as an impedance $Z_{line}$.

Beyond the common node 103 a main transformer 111 is arranged in the electric path to transform the combined power signals to a high voltage for transmission to the grid 113, wherein the transmission (possibly over long distances) is modelled by an impedance $Z_{grid}$.

A measurement station 115 is adapted to measure the voltage $V_{pcc}$ and the current $I_{pcc}$ at the node 103 representing the point of common coupling (PCC). Further, the measurement station 115 is adapted to measure a power loss $P_{loss}$ which is due to the modifying the electric power signals output from the generators 101 and supplying them to the common node 103 via the electric paths 105.

The measurement station 115 provides these values and/or values derived from these measured quantities to a high performance park pilot (HPPP) 117. The control unit 117 is adapted to set reference power levels ($P_{ref}$) and supply them to wind turbine control units 119. Further, the control unit 117 is adapted to supply operation voltage set points $V_{ref\_setpoint}$ to the AC/AC converters 107. In particular, the operation voltage setpoints supplied to different converters 107 may be different such that the power loss of the power production facility 100 is minimized.

In particular, the control unit 117 (HPPP) has an optimal voltage dispatch functionality 118 where an individual reference setpoint is derived for each wind turbine controller 119 and where the reference setpoints might be different from each other. The purpose of the HPPP optimal voltage dispatch functionality 118 is to reduce the overall power loss (transmission loss) in the wind farm and therefore a power optimization algorithm is implemented into the control unit 117. Therefore, the control unit 117 dispatches power references and voltage references to the controller 119 and to the converter controller inside the AC/AC converter 107. These two reference values are used to create a complex current from the converter 107. The electrical network consists of an impedance $Z_{reactor}$ to represent the smoothing reactor which is placed on the output of the converter 107. An impedance $Z_{pwm\_filter}$ and $Z_{auxiliary}$ is placed to the 690 V turbine terminal and the terminal voltage is fed back to the converter controller to maintain 690 V on the terminal. Each turbine has its own turbine transformer 109 where the transmission line impedance is connected to the HV (high voltage) side. All turbines are connected to a bus bar (33 kV) including the common node 103. The bus bar is connected to the grid transformer 111 (park transformer) which connects to the grid 113. Measurements are collected by the measurement station 115 at the PCC node 103 and these values are used as feedback in the closed loop configuration illustrated in Figure 1. The HPPP 117 applies the optimal voltage dispatch algorithm to calculate the optimal voltage references $V_{ref\_setpoint}$.

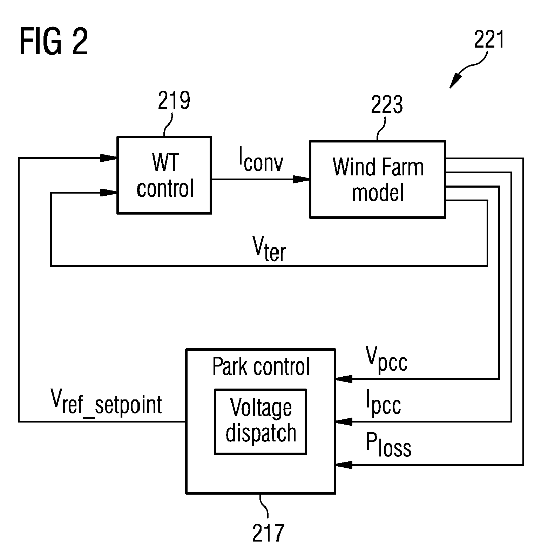

Figure 2 schematically illustrates a simulation model according to an embodiment which may be used in the power production facility illustrated in Figure 1. In particular, the simulation model illustrated in Figure 2 may be used in the optimal voltage dispatch algorithm 118 within the control unit 117 illustrated in Fig. 1 according to an embodiment. The simulation model 221 comprises a voltage dispatch algorithm implemented to reduce power loss in wind farms. The simulation model of the invention comprises a wind farm model 223 with the purpose of simulating active and reactive power at different levels and as the optimization of power loss is in focus, a voltage dispatch algorithm is included in the model. The simulation model 221 is adapted for

- power optimization in wind farms
- simulation of active and reactive power at all levels
  (flow in transmission line, PCC etc.)
- responses at all levels due to parameter change (Kp, Ki, number of turbines etc.)

In a first step a model of a wind farm is built. This model is constructed to be able to simulate and verify different scenarios of the wind farm. The wind farm model 223 includes:

- VCCS (voltage controlled current source simulating the converter current)
- Converter reactor
- Filter
- Auxiliary
- WT/park transformer
- transmission line
- grid

These are just exemplary electrical components which may be considered in building the wind farm model. These components are modelled with respect to the laws of electricity. The WT control unit controls the terminal voltage on the turbine by comparing the measured $V_{ter}$ and the $V_{ref\_setpoint}$ received from the park controller 117 illustrated in Figure 1 or park controller 217 illustrated in Figure 2.

The bolt lines in Figure 2 indicate vector/matrix signals, while thinned lines are scalar values. The vector signals are indexed as follows:

$$I_{conv} = \begin{bmatrix} I_{conv\_1} \\ . \\ . \\ . \\ I_{conv\_N} \end{bmatrix}$$

$I_{conv\_1}$ is the current output (complex number) from converter 107 at wind turbine number 1. The same index structure is valid for the vectors $V_{ter}$ and $V_{ref\_setpoint}$. The loss in a wind farm is given by the difference between the sum of active power generated from each turbine 101 and the active power at the common node 103 (at PCC):

$$P_{loss} = \sum_{N=1}^{N} P_{WT\_N} - P_{pcc}$$

The equation for optimization is:

$$\frac{dP_{loss}}{dV_{ref\_setpoint\_dispatch}} = 0$$

Furthermore the total loss from the turbine 101 to the common node 103 (PCC) is given as the individual losses in the converter reactor, PWM filter, auxiliary, turbine transformer and transmission line:

$$P_{loss} = P_{reac} + P_{filt} + P_{aux} + P_{turbine\_TX} + P_{short\_line} =$$
$$= |I_{conv}|^2 \cdot R_{reac} + \mathrm{Re}\left\{\frac{V_{ter}^2}{Z_{filt}*}\right\} + \mathrm{Re}\left\{\frac{V_{ter}^2}{Z_{aux}*}\right\} + |I_{in}|^2 \cdot R_{turbine\_TX} + |I_{in}|^2 \cdot R_{short\_line}$$

$I_{in}$ is given by

$$I_{conv} = I_{filt} + I_{aux} + I_{in} \Leftrightarrow I_{in} = I_{conv} - I_{filt} - I_{aux}$$

The terminal voltage $V_{ter}$, converter current $I_{conv}$ and $I_{in}$ are all depending on the voltage at the common node 103 (PCC), while the impedances and resistances are constant.

Below two methods are described to derive the dispatch voltages $V_{ref\_setpoint}$ which may be applied in the power production facility 100 illustrated in Figure 1.

Method 1:

$P_{loss}$ should be minimized with respect to the dispatch voltage $V_{ref\_setpoint}$, where

$$V_{ref\_setpoint\_dispatch} = V_{ref\_setpoint} \cdot \begin{bmatrix} a_1 \\ a_2 \\ \cdot \\ \cdot \\ a_N \end{bmatrix}$$

The setpoint output from the park controller is a real number. The active power loss depends on the magnitude of the setpoint, therefore scaling $V_{ref\_setpoint}$ by multiplying with a gain matrix will give us the possibility to minimize the active power loss. The matrix may comprise real number tuneable gain controlled adaptively or with prediction filters (i.e. Burg algorithm, Levinson-Durbin, Wiener).

Method 2:

$P_{loss}$ should be minimized with respect to the dispatch voltage $V_{ref\_setpoint}$, where

$$V_{ref\_setpoint\_dispatch} = V_{ref\_setpoint} + [offset_1 \quad .. \quad .. \quad .. \quad offset_N]$$

The equation for optimality may be:

$$\frac{dP_{loss}}{dV_{ref\_setpoint\_dispatch}} = 0$$

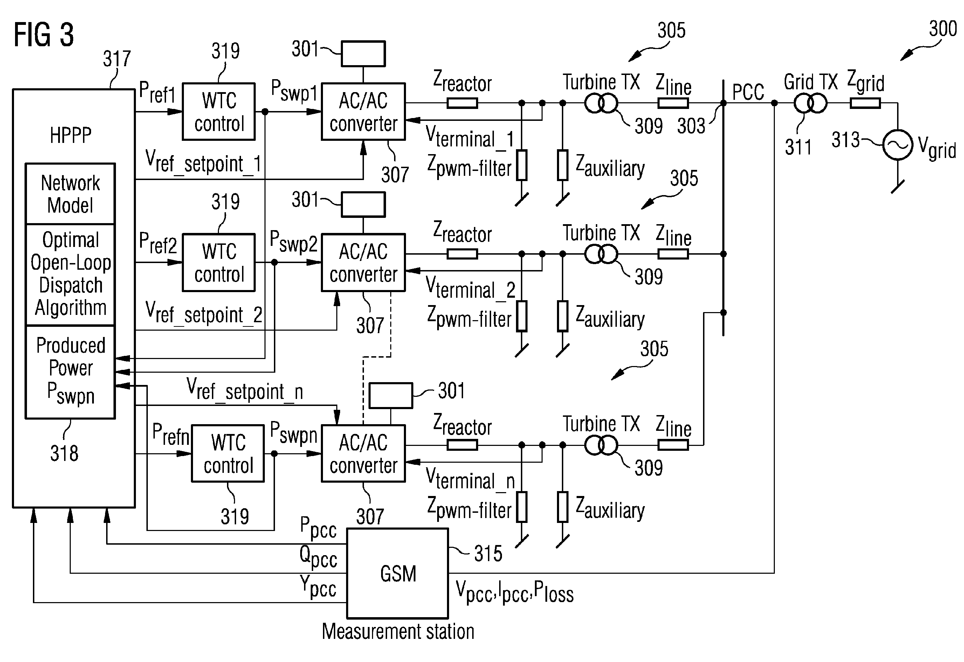

Figure 3 schematically illustrates a power production facility 300 according to another embodiment. The construction of the power production facility 300 is similar to the construction of the power production facility 100 illustrated in Figure 1. However, the control unit 217 is different from the control unit 117 of the embodiment illustrated in Figure 1 in particular with respect to the algorithm how to derive and adjust the operation voltage $V_{ref\_setpoint}$.
The control unit 217 comprises an optimal voltage dispatch function which enables setting different reference set points for each converter 307 for each (wind turbine) generator 301. Thereby, the control is based on optimization, in particular minimization, of the power loss. In a conventional power production facility the differences between different turbines regarding their produced power and the transmission line properties and lengths to the common node 303 (PCC) may lead to unnecessary power losses if neglected. The control unit 317 is adapted to provide the optimal voltage settings for the turbine so that the overall power loss is minimized.
In contrast to the embodiment 100 illustrated in Figure 1 the embodiment 300 illustrated in Figure 3 is based on an open loop configuration of the control unit 317, thus requiring no feedback of a measurement of the voltage at the common node 303 as was required in the embodiment illustrated in Figure 1. In contrast to the embodiment illustrated in Figure 1 the control unit 317 relies on a correct model of the wind farm or entire power production facility 300 in order to derive the optimal voltage settings $V_{ref\_setpoint}$ to be adjusted at the converters 307. Thus, instead of feeding back the measured values $V_{pcc}$, $I_{pcc}$ into the control algorithm comprised in the control unit 317 these values are used to check, if the results of the open loop optimization really leads to the desired values at the common node 303. The HPPP (control unit 317) applies the optimal open loop voltage dispatch algorithm to calculate the optimal voltage references. The calculation may be based on a wind farm transmission network model, the information about the power produced by the individual turbines, the definition of the cost function (power losses up to the common node 303) and the definition of acceptable voltage values at individual turbine and at the PCC (common node 303). Below details about the simulation of an open loop dispatch function are described.
The optimization problem is according to this embodiment the minimization of the transmission losses under the constraint that the magnitude of the terminal voltages at each turbine and the magnitude of the voltage at the common node 303 (PCC) are between given bounds, e.g. between 0.9 and 1.1 of base values (nominal values).
Hence, this is a constraint optimization problem over the given wind farm connection network within a quality constraint where N is the number of turbines:

$$\min_{x_1 \ldots x_N} P_{loss}(x_1 \ldots x_N)$$

$$V_{min} \leq \frac{|V_{ter}(i)|}{|V_{ter}(i)|_{nom}} \leq V_{max} \quad i = 1 \ldots N$$

$$V_{min} \leq \frac{\left|V_{PCC}\right|}{\left|V_{PCC}\right|_{nom}} \leq V_{max}$$

The free parameters ($X_1 \dots X_N$) can either be:

1. The turbine terminal voltages $V_{ter}$. In this case the turbine voltage controllers may be kept in the model used in the optimization and they determine the necessary complex currents at the converter $I_d$. The farm controller or control unit 317 (HPPP) is not active (is removed from the loop) during the optimization.

2. The complex part of the converter currents Ig. In this case the turbine voltage controllers are taken from the loop too and the model is directly fed with $I_d$ currents. This optimization is faster and "cleaner", since there is the parameters of the turbine voltage controllers do not restrict the optimization. Once the optimal $I_d$ is obtained, the corresponding $V_{ter}$ are also automatically available for each individual turbine.

This optimization problem is solved by an iterative "active set" constraint optimization algorithm which takes into account the structure of the problem.

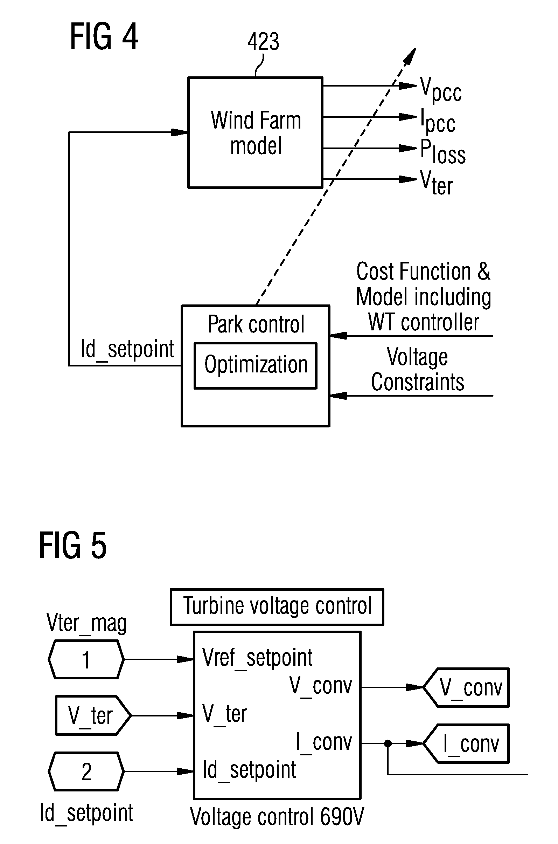

The implementation of the optimal voltage dispatch algorithm is depicted in Figure 4. The optimization block comprises the following equations which are used for optimization:

- The linear circuit model with a given admittance matrix Y, the vector of node currents I and the corresponding voltages U (where some entries are fixed) :

$$Y \cdot U = I$$

- The currents and the filter and the auxiliary is defined at every turbine "k" individually through apparent power

$$S^k: \quad I^k_{filt,aux} = \left(S^k_{filt,aux} / U^k_{ter}\right)^*$$

- The real part of the converter current $I_d$ at every turbine "k" is proportional to the produced power of the turbine $P^k$:

$$I^k_d = \left(P^k / \left|U^k_{ter}\right|\right)$$

The cost function, as stated above, is the sum of the real power losses over all turbines in the controller, the filter, the auxiliary, the transformer and the line to the PCC (common node 303).

The above equations may be used to analytically calculate the local gradient functions used in the optimization algorithm. Alternatively, the gradients may also be numerically estimated by repeated model runs with slightly changed parameter values.

In the steady state regime, the herein proposed optimization may not be concerned by the time evolution of the system. In the dynamic model case, the power loss function may be optimized over several time steps in the future (fixed time interval); in this case the optimization could be seen as a model predictive control application.

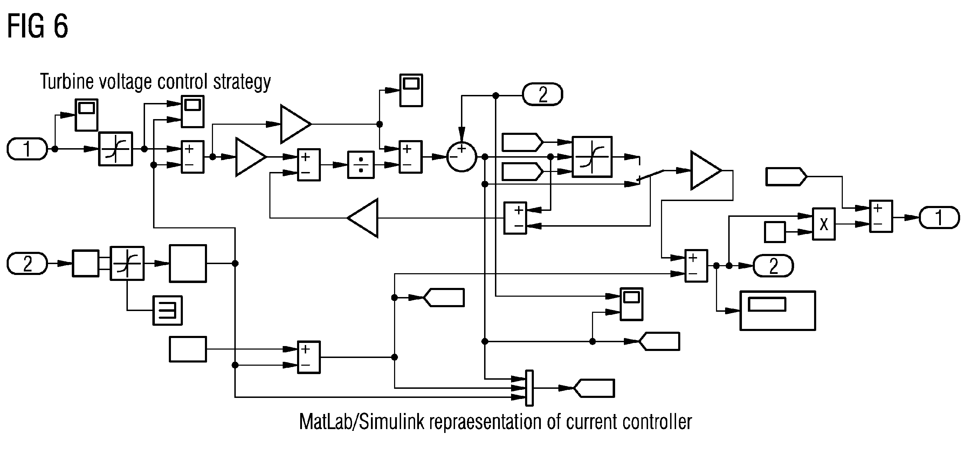

Figures 5 and 6 schematically show how the $I_{d\_setpoint}$ may be injected into the current controller according to an embodiment.

The open loop optimization (see embodiment illustrated in Figure 3) may provide the optimal terminal voltages as well as the complex converter currents (all of these are available by solving the circuit equations). Hence, the WTC controller 319 (which in the standard case generates the complex current) may use the already available optimal complex current in the feed-forward fashion. Hence, with this feed-forward term the controller may be much faster than without it and its role may then only to stabilize the already provided optimal operating point.

Naturally, the controller may also do its job without this feed-forward term but will be slower.

It should be noted that the term "comprising" does not exclude other entities or steps and "a" or "an" does not exclude a plurality. Also entities described in association with different embodiments may be combined. It should also be noted that reference signs in the claims should not be construed as limiting the scope of the claims.

**Claims**

1. A method for controlling a power production entity, the method comprising:

   • generating a plurality of electric power signals by a plurality of power production entities;
   • measuring a plurality of power levels of the plurality of power signals;
   • modifying the plurality of power signals;
   • supplying the plurality of modified power signals at a common node;
   • adjusting an operation voltage of at least one power production entity of the plurality of power production entities based on the plurality of measured power levels such that a power loss of the power signals caused by the modifying and/or supplying is minimized.

2. The method according to claim 1, wherein the adjusting the operation voltage is performed such that a voltage at the common node is within a predetermined minimum and predetermined maximum of a target node voltage, in particular in a range of 0.9 to 1.1 times a predetermined target node voltage.

3. The method according to claim 1 or 2, wherein the adjusting the operation voltage is performed such that the adjusted operation voltage is within a predetermined minimum and predetermined maximum of a target operation voltage, in particular in a range of 0.9 to 1.1 times a predetermined target operation voltage.

4. The method according to any of the claims 1 to 3, wherein the adjusting the operation voltage is performed such that at least two adjusted operation voltages are different.

5. The method according to any of the claims 1 to 4, wherein the adjusting the operation voltage is further based on establishing a relationship between the power loss and the operation voltage.

6. The method according to any of the claims 1 to 5, wherein the modifying the plurality of power signals comprises:

   • converting the plurality of power signals to a predetermined frequency;
   • transforming the plurality of converted power signals to a higher voltage; and
   • transmitting the plurality of transformed power signals to the common node.

7. The method according to any of the claims 1 to 6, wherein adjusting the operation voltages is further based on modelling the modifying the plurality of power signals using simulation, in particular considering a gradient of the power loss of the power signals with respect to at least one of the operation voltages.

8. The method according to any of the claims 1 to 7, further comprising measuring a voltage at the common node, wherein the adjusting the operation voltage is further based on the measured common node voltage.

9. The method according to any of the claims 1 to 7, wherein the adjusting the operation voltage is further based on a solution of minimizing the power loss under the constraint that the voltage at the common node remains within a predetermined minimum and predetermined maximum of a target node voltage, in particular within 0.9 to 1.1 times a target node voltage and the operation voltages remain within a predetermined minimum and predetermined maximum of a target operation voltage, in particular within 0.9 to 1.1 times a target operation voltage.

10. A system for controlling a power production entity, the system comprising:

   • a common node (103, 303) at which a plurality of modified power output signals are supplied, the plurality of modified power output signals being obtained by modifying a plurality of electric power signals generated by a plurality of power production entities (101, 301);

• a measuring system (115, 315) for determining power levels of the plurality of power output signals; and
• a control unit (117, 217) adapted to adjust an operation voltage of at least one of the plurality of power production entities such that a power loss caused by the modifying the electric power signals and/or supplying the modified electric power signals to the common node is minimized.

11. The system according to claim 10, wherein the measuring system comprises a voltage sensor for measuring a voltage at the common node and/or a power sensor for measuring a power of a sum of the plurality of power output signals.

12. An electric power facility, comprising:

• a system according to claim 10 or 11; and
• a plurality of power production entities adapted to generate the plurality of power output signals.

13. The electric power facility according to claim 12, wherein the control unit is adapted to adjust the operation voltage based on a model of the electric power facility.

FIG 1

# FIG 2

FIG 3

# FIG 4

423

Wind Farm model

$V_{pcc}$
$I_{pcc}$
$P_{loss}$
$V_{ter}$

Id_setpoint

Park control

Optimization

Cost Function & Model including WT controller

Voltage Constraints

# FIG 5

Turbine voltage control

Vter_mag

1

V_ter

2

Id_setpoint

Vref_setpoint

V_ter

Id_setpoint

V_conv

I_conv

V_conv

I_conv

Voltage control 690V

# FIG 6

Turbine voltage control strategy

MatLab/Simulink repraesentation of current controller

EP 2 397 689 A1

Europäisches
Patentamt

European
Patent Office

Office européen
des brevets

## EUROPEAN SEARCH REPORT

**Application Number**

EP 10 16 6147

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 175 540 A2 (GEN ELECTRIC [US]) 14 April 2010 (2010-04-14) * abstract * * figures 1,3-6,8a,13 * * paragraph [0006] * * paragraph [0015] - paragraph [0019] * * paragraph [0019] - paragraph [0030] * * paragraph [0035] - paragraph [0058] * * claims 20-22 * | 1-13 | INV. F03D9/00 H02J3/38 H02J3/16 |
| A | US 2010/025994 A1 (CARDINAL MARK E [US] ET AL) 4 February 2010 (2010-02-04) * the whole document * | 1-13 | |
| A | EP 1 512 869 A1 (GEN ELECTRIC [US]) 9 March 2005 (2005-03-09) * the whole document * | 1-13 | |
| A | EP 1 508 951 A1 (GEN ELECTRIC [US]) 23 February 2005 (2005-02-23) * abstract * * figures 4,5 * * paragraph [0013] - paragraph [0029] * * claims * | 1-13 | TECHNICAL FIELDS SEARCHED (IPC) H02J F03D |
| A | US 2003/011348 A1 (LOF PER-ANDERS KRISTIAN [SE] ET AL LOF PER-ANDERS KRISTIAN [SE] ET AL) 16 January 2003 (2003-01-16) * abstract * * figures * | 1-13 | |

The present search report has been drawn up for all claims

| Place of search | Date of completion of the search | Examiner |
|---|---|---|
| Munich | 28 January 2011 | Hurtado-Albir, F |

EPO FORM 1503 03.82 (P04C01)

**ANNEX TO THE EUROPEAN SEARCH REPORT
ON EUROPEAN PATENT APPLICATION NO.** EP 10 16 6147

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2011

| Patent document cited in search report | | Publication date | Patent family member(s) | | Publication date |
|---|---|---|---|---|---|
| EP 2175540 | A2 | 14-04-2010 | CN | 101719676 A | 02-06-2010 |
| | | | US | 2010094474 A1 | 15-04-2010 |
| US 2010025994 | A1 | 04-02-2010 | CN | 101640419 A | 03-02-2010 |
| | | | EP | 2161444 A2 | 10-03-2010 |
| EP 1512869 | A1 | 09-03-2005 | AU | 2004208656 A1 | 17-03-2005 |
| | | | BR | PI0403798 A | 07-06-2005 |
| | | | CN | 1595758 A | 16-03-2005 |
| | | | US | 2006012181 A1 | 19-01-2006 |
| | | | US | 2006255594 A1 | 16-11-2006 |
| | | | US | 2005046196 A1 | 03-03-2005 |
| EP 1508951 | A1 | 23-02-2005 | AU | 2004203836 A1 | 10-03-2005 |
| | | | BR | PI0403608 A | 14-06-2005 |
| | | | CN | 1630157 A | 22-06-2005 |
| | | | US | 2005040655 A1 | 24-02-2005 |
| US 2003011348 | A1 | 16-01-2003 | EP | 1415379 A1 | 06-05-2004 |
| | | | WO | 03007455 A1 | 23-01-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6628103 B2